# EUROPEAN PATENT SPECIFICATION

(11) **EP 1 581 765 B1**
(45) Date of publication and mention of the grant of the patent: **22.04.2009**
(21) Application number: 04700301.7
(22) Date of filing: 06.01.2004
(51) Int. Cl.: F16M 7/00

(54) **COMBINATION OF AN HEIGHT-ADJUSTABLE FOOT AND AN ADJUSTING TOOL**
KOMBINATION AUS EINEM HÖHENEINSTELLBAREN FUSS UND EINEMEINSTELLWERKZEUG
COMBINAISON COMPRENANT UN PIED AJUSTABLE EN HAUTEUR ET UN OUTIL DE REGLAGE

(30) Priority: 06.01.2003 NL 1022309
(43) Date of publication of application: 05.10.2005
(73) Proprietor: Machine Support B.V., 2984 CB Ridderkerk (NL)
(72) Inventor: VERMEULEN, Rene, NL-3207 HM Spijkenisse (NL)
(74) Representative: van Westenbrugge, Andries
(86) International application number: PCT/NL2004/000003
(87) International publication number: WO 2004/061358

(56) References cited:
- EP-A- 0 316 283
- DE-A- 2 405 368
- US-A- 6 068 234

## Description

The present invention relates to a combination comprising, on the one hand, an adjustable foot for setting up equipment in alignment and, on the other hand, a tool for setting the height of the adjustable foot, wherein the adjustable foot comprises:
- a first adjustable part provided with an axial bore with internal screw thread;
- a second adjustable part provided with external screw thread matching the internal screw thread, which second adjustable part, when screwed into the bore, can be adjusted in the axial direction with respect to the first adjustable part by turning with respect to the first adjustable part and which second adjustable part is provided with at least one hole that runs axially;
- a support part, provided on the first adjustable part or second adjustable part, and
- a washer,
wherein the washer and the support part are each provided with a convex, respectively, concave surface, having essentially the same radius of curvature, such that the angle of the washer can be adjusted with respect to the support part
wherein the tool has an insertion end that can be inserted into the hole in the axial direction and wherein the insertion end is provided with gipper means that are so equipped that, when they engage on the interior of the hole and the insertion end is rotated about the axial axis, the second adjustable part also turns.

An adjustable foot of such a combination is disclosed in EP 316 283. The adjustable foot disclosed in the latter publication consists of a first adjustable part (2) and a second adjustable part (6) with, at the top, a broadened support part (4) that is concave at the top thereof. The second adjustable part is provided with an external screw thread and the first adjustable part is provided with an internal screw thread, which internal and external screw threads match one another such that when the second adjustable part (6) is turned with respect to the first adjustable part (2) the axial height of these parts with respect to one another is adjusted. On top of the support part (4) there is a washer (7) that is convex on the underside thereof, with a radius of curvature equal to the radius of curvature of the concave top of the support part (4).

Adjustable feet as disclosed in EP 316283, like adjustable feet according to the present invention, are used when placing pieces of equipment stable and level on a substrate so that, for example, vibration is avoided (consider, for example, washing machines that are positioned on the substrate by means of adjustable feet so that they are as stable as possible), also so that introducing stresses into the equipment is avoided when tightening anchor bolts for anchoring and also for aligning various pieces of equipment with respect to one another. In the latter case consideration must be given, for example, to a motor that is connected to a powered installation by means of a shaft. When the motor and the powered installation are separate units which usually have to be aligned with one another with regard to the transmission shaft. Adjustable feet are also used for this purpose.

In EP 316 283 holes and 11 are provided in the broadened top section 4 of the second adjustable part 6 for a tool for setting the height of the adjustable foot. A disadvantage of this construction is that with this arrangement the overall height of the adjustable foot is relatively high; after all, the holes 11 have to remain accessible at all times and thus cannot be sunken in the first adjustable part.

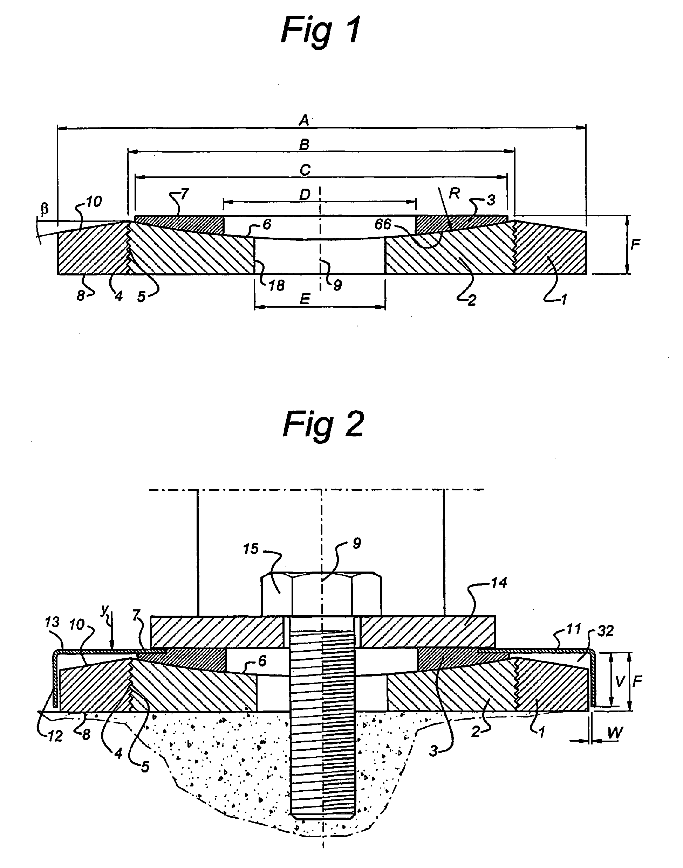

A combination according to the preamble of claim 1 is disclosed in DB-2,405,368. According to fig. 1A, this combination comprises a tool rod comprising a gripper member, which is swivable mounted to the tool rod. This gripper member can swivel between a first position and a second position. In the first position the gripper member lies completely inside the cylindrical tool rod. In the second position, the gripper member extends radially from the tool rod in order to engage with a cam on the inside of one of the adjustable parts.

The aim of the present invention is to provide a combination of the type mentioned in the preamble which, in particular, enables the overall height of the adjustable foot to be minimal and is reliable in its use.

The abovementioned aim is achieved according to the invention by providing a combination according to claim 1. This tool thus engages on the second adjustable part in the at least one axial hole. This at least one axial hole is accessible to the tool irrespective of the degree to which the second adjustable part is sunken in the first adjustable part (or, more accurately, has been screwed into the first adjustable part). It will be clear to a person skilled in the art that such a tool interacting with at least one axial hole can be produced in a wide variety of ways. For example, consideration can be given to a hole that runs axially and is provided centrally in the second adjustable part in the from of a blind hole with a slot, hexagonal cavity, square cavity or a cavity that is non-circular in some other way in the bottom, into which cavity a tool with a correspondingly shaped end section at the insertion end can be inserted. However, it is also possible to make two or more eccentric axial holes in the top surface of the second adjustable part or optionally the bottom surface of the second adjustable part, into which holes the insertion end of a tool can be inserted so as then to be able to turn the second adjustable part by means of this tool. The driver members can then, for example, comprise pins that are inserted by radial spreading into the blind holes provided in the interior peripheral surface of the hole.

According to an advantageous embodiment of the invention the gripper means are equipped to engage on the interior peripheral surface of the hole. In this context the interior peripheral surface is understood to be the peripheral surface that extends parallel to the axial direction of the hole running axially.

However, on cost grounds it is preferable if the hole has a circular peripheral shape and if the interior peripheral surface of the hole does not require further machining. In this context it is preferable if the driver members are clamping members for clamping engagement on the interior peripheral surface of the hole. In this context it must be borne in mind that relatively little force is needed for turning the second adjustable part with respect to the first adjustable part if this turning takes place essentially in the non-loaded state. The clamping members for clamping engagement will then relatively easily be able to have adequate grip on the interior peripheral surface of the hole via frictional force.

However, according to another embodiment of the invention it is also very readily possible that the hole at least partially has a non-circular peripheral shape and that the gripper means have a gripper head that can be accommodated with a tight fit in the non-circular section of the hole. This can be achieved, for example, by providing the hole, or at least part of the hole, with a square cross-sectional shape. However, this can also be achieved by means of a bore where the axial, cylindrical wall thereof is provided with a slot running axially.

According to a further advantageous embodiment of the invention, the tool furthermore comprises a tensioning pin with a tensioning member, for example a nut, that is able to move along it, wherein the tensioning pin is actively connected to the second support part and the tensioning member is actively connected to the first support part and wherein the gripper means are supported by the first and second support part in such a way that the gripper means undergo a radial movement when the first and second support parts are moved axially with respect to one another. In this way a radially outward movement or radially inward movement of the gripper means can be achieved in a mechanically simple manner depending on the direction in which the tensioning member moves axially along the tensioning pin.

With this arrangement it is furthermore advantageous if the gripper means comprise fingers that run axially, between which one end of the anchor pin can be accommodated, and if the hole is an axial opening through the second adjustable part, wherein the axial opening has a broadened zone that extends from one end of the axial opening in the axial direction and that has a cross-section which is larger than the cross-sectional shape of the anchor pin to such an extent that the fingers can be inserted therein with one end of the anchor pin between them. In this way it is possible to adjust the height of the second adjustable part with respect to the first adjustable part, while here a so-called anchor pin for subsequent anchoring of the equipment to be set up in alignment runs through them. With this arrangement use is then made of the axial opening through the second adjustable part that has already been provided for the anchor pin. The second adjustable part thus does not have to be further modified. In this context it must, furthermore, be pointed out that with conventional adjustable feet the axial opening through the second adjustable part is usually already given a larger diameter than the anchor pin to be accommodated therein.

With, a view to stability of the adjustable foot during installation, it is preferable if the top of the second adjustable part comprises the support part and that this support part is thus not provided on the top of the first adjustable part.

With a view to minimising the overall height of the adjustable foot it is advantageous if the support part is located completely within a contour determined by the diameter of the external screw thread, more particularly if the entire second adjustable part is located within a contour determined by the diameter of the external screw thread. In this way it is possible to let the second adjustable part sink completely into the first adjustable part.

In order further to minimize the overall height of the adjustable foot, it is preferable if the support part is at least partially, preferably completely, sunken in a zone of the second adjustable part that is surrounded by the external screw thread.

In order to minimise the overall height of the adjustable foot, it is preferable if the diameter of the washer is smaller than the diameter of the second adjustable part. In this way the inclination of the washer can still be adjusted if the second adjustable part is sunken in the first adjustable part. Preferably, the diameter of the washer is approximately 4 to 10 mm smaller than the diameter of the second adjustable part, for example approximately 6 mm smaller.

On stability grounds it is preferable if the support part has a concave surface and the washer has a convex surface. The washer is then not able to slip off the support part by itself because it is in a hollow, i.e. the concave surface of the support part. This plays a role in particular when installing an adjustable foot according to the invention. So that the equipment to be set up in alignment by means of the adjustable foot from the combination according to the invention can also be anchored to the substrate via the adjustable foot, it is preferable if the second adjustable part and the washer are provided with an axial opening for an anchor bolt. So that the angle of the washer can be adjusted to an adequate extent, it is advantageous if the axial opening through the washer has a diameter that is approximately 32 to 48 % larger than the diameter of the axial opening through the second adjustable part.

With a view to minimising the overall height of the adjustable foot it is furthermore advantageous if the axial length of the second adjustable part is equal to or less than the axial height of the first adjustable part and if the second adjustable part is provided with external screw thread along its entire axial length and/or the internal screw thread of the axial bore extends over the entire axial height of the first adjustable part. In this way it is ensured that the second adjustable part can be completely sunken in the first adjustable part without as a result the second adjustable part having to protrude from the first adjustable part on any side.

According to a further aspect the invention relates to a combination according to the invention, a substructure an equipment set up in alignment on said substructure, and an anchor bolt, wherein the equipment is anchored to the substructure by means of the anchor bolt, with the adjustable foot between them. It is particularly advantageous here if a bottom surface of the first adjustable part rests on the substructure and if the equipment is in contact with the washer or with the cap which, in turn, is in contact with the washer.

According to yet a further aspect the invention relates to the use of a tool as defined in Claim 18.

The present invention will be explained in more detail below with reference to the appended drawings. In the drawings:
Figure 1 shows a cross-sectional view of an adjustable foot part of a combination according to the invention;
Figure 2 shows, in cross-section, a variant of an adjustable foot part of a combination according to the invention in an installed position;
Figure 3 shows a cross-sectional and partial front view of a first tool part of a combination according to the invention for installation, and
Figure 4 shows a cross-sectional and partial front view of an adjustable foot part of a combination according to the invention together with a second tool part of a combination according to the invention for installation.

Fig. 1 shows, diagrammatically in cross-section, an adjustable foot part of a combination according to the invention This adjustable foot comprises an annular element 1 forming the first adjustable part, a shaft element 2 forming the second adjustable part and a washer 3. The annular element 1 is provided with internal screw thread 4 and the shaft element 2 is provided with external screw thread 5. The internal screw thread 4 and external screw thread 5 match one another, that is to say the shaft element 2 can be screwed into the annular element 1. The components 1, 2 and 3 are preferably made of steel, in particular a high grade steeL

The shaft element 2 is provided at the top with a support part in the form of a concave surface 6 with a radius of curvature R. The washer is provided on the underside thereof with a convex surface 66 with corresponding radius of curvature R. The washer 3 is thus able to move with respect to the shaft element 2, it being possible for the inclination of the top surface 7 of the washer 3 to be adjusted with respect to the bottom surface 8 of the annular element 1 so that, on the one hand, flat contact of the underside 8 of the annular element 1 on the substrate and, on the other hand, flat contact of the top surface 7 of the washer with the underside of the equipment to be supported can be achieved.

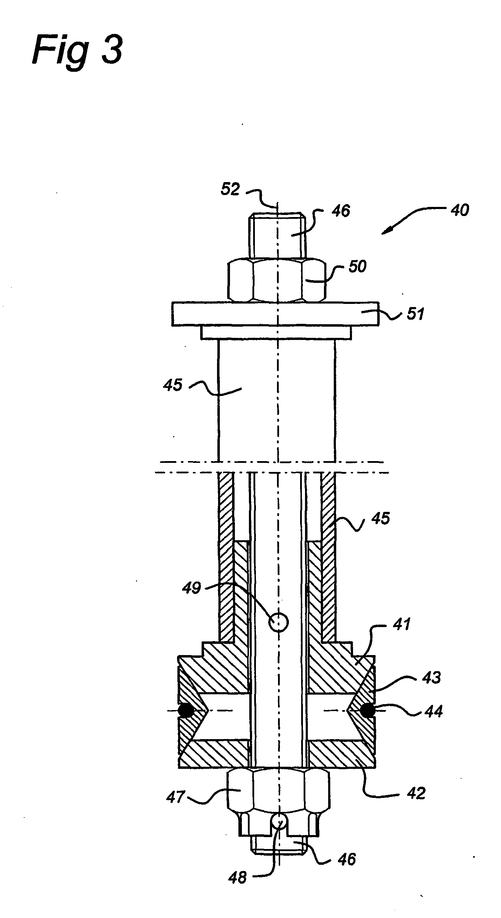

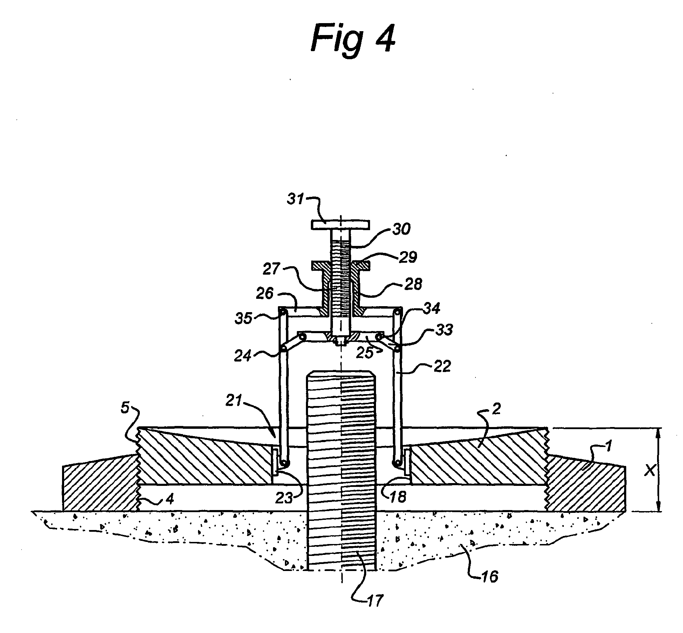

By turning the shaft element 2 with respect to the annular element 1 (Figures 1 and 2 show a position in which they are completely screwed into one another, whilst Figure 3 shows a position in which they are partially screwed into one another) the vertical distance X (see Figure 4) bridged by the adjustable foot can be set as desired.

With reference to the reference symbols A, B, C, D, E, F and R in Figure 1 and Table 1 below, ten models, called Type 1 to Type 10, are indicated by way of example in Table 1, with their values A, B, C, D, E, F and R. Except for F and R, these are diameter values. The adjustable foot has circular symmetry about axis 9.

**Table 1**

| | **A in mm** | **B in mm** | **A/B** | **C in mm** | **D in mm** | **E in mm** | **F in mm** | **R in mm** |
|---|---|---|---|---|---|---|---|---|
| Type 1 | 60 | 42 | 1.4 | 36 | 20 | 15 | 16 | 100 |
| Type 2 | 80 | 52 | 1.5 | 46 | 26 | 19 | 19 | 100 |
| Type 3 | 100 | 64 | 1.6 | 58 | 32 | 23 | 20 | 100 |
| Type 4 | 120 | 82 | 1.5 | 76 | 40 | 29 | 20 | 100 |
| Type 5 | 140 | 95 | 1.5 | 89 | 48 | 35 | 20 | 250 |
| Type 6 | 160 | 110 | 1.5 | 104 | 58 | 40 | 20 | 250 |
| Type 7 | 190 | 130 | 1.5 | 124 | 68 | 46 | 20 | 250 |
| Type 8 | 220 | 160 | 1.4 | 154 | 80 | 54 | 25 | 400 |
| Type 9 | 230 | 160 | 1.4 | 154 | 84 | 62 | 25 | 400 |
| Type 10 | 250 | 170 | 1.5 | 164 | 95 | 70 | 25 | 400 |

The diameter of the washer 3 (see also Table 1) is approximately 6 mm smaller (i.e. B-C) than the diameter of the shaft element 2. This provides a relatively wide range of inclinations for adjusting the inclination even when the shaft element has been screwed completely into the annular element 1.

In order to prevent dirt and moisture that reaches the adjustable foot from above being able to get into the matching screw thread 4, 5, the top surface 10 of the annular element 1 is shaped such that it tapers at an angle β in the radially outward direction. This angle β can be in the range from 5° to 15°. The more acute the angle β the better will dirt and moisture be guided away radially outwards from the matching screw thread 4, 5, but the greater will also be the adverse effect on the bearing capacity of the internal screw thread 4 if this continues to the top of the annular element.

Figure 2 shows essentially approximately the same adjustable foot as in Figure 1, but now provided with a cap 11. It is pointed out that the cap 11 can be fixed to the washer 34 but could also be formed as an integral unit with the washer 3.

The cap is preferably sunken with respect to the top surface of the washer. The cap is thus not a component that has to support the so-called equipment 14. The cap can then be made of a relatively weak material, such as plastic, compared with the washer. The primary purpose of the cap 11 is, on the one hand, to cover the matching screw thread 4, 5 from the top and, on the other hand, to protect the concave and convex surfaces 6, 66 against the ingress of dirt and moisture. For this purpose it is important that the cap 11 has a diameter that is greater than that of the internal screw thread 5 or external screw thread 4 (which comes down to the same thing) or is greater than the diameter of the washer. For this purpose it suffices if the cap 11, viewed from the axial axis 9, extends as far as, for example, approximately arrow Y, that is to say to beyond the matching screw thread 4, 5. In order to ensure this, the diameter of the cap 11 will preferably be at least 10 %, more preferentially at least 25 %, greater than the diameter of the matching screw thread 4, 5. What can be achieved by giving the cap 11 a larger diameter and providing it with a peripheral wall 12 that hangs down, so that an interior accommodating space 32 is formed below the top surface 13 of the cap and between the wall 12 that hangs down, is that the ingress of dirt and/or moisture radially from the outside along the top of the annular element 1 is also counteracted. As will be clear, with this arrangement the tapering top surface 10 is no longer of direct importance, although it still does offer advantages. The tapering surface 10 could also optionally be dispensed with if the cap 11 has a diameter that extends only as far as approximately the arrow Y, that is to say if the cap has a diameter that is greater than the diameter of the matching screw thread 4, 5.

Figure 2 furthermore shows a foot section 14 of an equipment to be set up in alignment, as well as a hexagonal bolt 15 provided with screw thread, by means of which said equipment 14 is anchored on the substrate 16. The adjustable foot in Fig. 2 is shown in the completely screwed-in position, but it will be clear that in the case of equipment set up in alignment this will not occur very often in practice.

In order to prevent the cap 11 as shown in Fig. 2 impeding the washer 3 in assuming a sloping position with respect to the shaft element 2, it is preferable if the internal height V of the cap 11 is approximately 95 % to 99 % of the minimum overall height F (where the axial thickness of the cap 11 has been left out of consideration). Since the wall 12 of the cap 11 that extends downwards will locally tend to move towards the annular element 1 when the washer 3 tilts with respect to the shaft element 2, it is preferable if the internal diameter of the cap 11 is larger than the largest external diameter of the other parts of the adjustable foot, in particular is approximately 0.5 to 2 % larger than the largest of the external diameters of the other parts. With this arrangement the distance W is then half said 0.5 to 2 % oversize in the cap diameter.

So as to prevent the shaft element 2 being pushed downwards with respect to the annular element 1 under the influence of a load acting in the direction of the axial axis 9, because the external screw thread 5 completely or partially loses engagement with the internal screw thread 4, it is important to take a diameter that is at least 1.4 times the nominal diameter of the matching screw thread B for the external diameter A of the annular element 1. In this way it is reliably ensured that the annular element 1 is not able to stretch in the radial direction to such an extent that the internal screw thread 5 and external screw thread 4 locally lose their engagement. So that the internal screw thread can continue as a fully load-bearing screw thread up to the top of the annular element 1, it is preferable if the angle β is at most 15°, for example approximately

In order to keep the radial dimension of the adjustable foot part of a combination according to the invention to a minimum at the same time, it is preferable if the external diameter of the annular elements is at most 1.9 times the diameter of the matching internal and external screw thread, more preferentially at most 1.6 times said diameter of the matching internal and external screw thread.

As will be clear from Figures 1 and 2, a very thin adjustable foot can be produced in terms of overall height F by means of the measures described above.

Shaft element 2 can be given a maximum height that is equal to or less than the maximum axial height of the annular element 1. With this arrangement the concave dish 6 is as it were completely sunken in the region surrounded by external screw thread 5. However, this means that the shaft element 2 becomes less readily accessible, at least compared with the known state of the art as described in EP 316 283. In order nevertheless to be able to adjust the shaft element 2 with respect to the annular element, the invention provides a special tool. This will be explained in more detail with reference to Figure 3 and Figure 4.

Figure 3 shows a first embodiment of such a tool 40. The tool 40 shown comprises a tensioning pin 46 provided with screw thread with an operating nut 50 at the top. The tensioning pin 46 runs through a sleeve 45. A second clamping block guide 41, acting as second support part, is provided at the bottom of the sleeve 45. The clamping block guide 41 has a tapering peripheral surface. A first clamping block guide 42, acting as first support part and likewise having a tapering guide surface, is provided below the clamping block guide 41. This first clamping block guide 42 bears on a nut 47. This nut 47 is fixed on the pin 46 by means of a locking pin 48 such that it cannot be turned. Three clamping blocks 43 are provided in the peripheral direction around the axial axis 52. These clamping blocks 43 are held together around the axis 52 by an elastic ring 44. The elastic ring 44 is pretensioned and allows the clamping blocks 43 to move radially outwards overcoming a spring force or to move radially inwards under the influence of the spring force. This depends on the change in the axial distance between guide part 41 and guide part 42. It is advantageous if the nut 47 is able to rotate with respect to the guide part 42. Rotation of the pin 46 with respect to the sleeve 45 is prevented by a peg 49 that is provided on the pin 46, runs transversely with respect to the pin and is accommodated in an axial slot provided in the sleeve 45. A closing flange 51 is provided at the top of the sleeve 45.

The axial distance between the guide parts 41 and 42 can now be changed by turning the nut 50. When the guide parts 41 and 42 move axially towards one another, the clamping blocks 43 are pushed radially outwards. When the guide parts 41, 42 move axially apart, the clamping blocks 43 will move radially inwards under the influence of the elastic pretension of ring 44. It will be clear to a person skilled in the art how the tool 40 is to be used in order to turn the shaft element 2 with respect to the annular element 1. For this purpose the bottom of the tool 40 is inserted in the bore 18 in such a way that the clamping blocks 43 are located in the bore. The nut 50 is then turned such that the guide parts 41 and 42 approach one another until the clamping blocks 43 engage sufficiently firmly on the peripheral wall of the bore 18. The shaft part 2 can then be turned by holding the tool 40 still and turning the annular element 1 or, conversely, holding the annular element 1 still and turning the tool 40 about the axis 52.

Figure 4 shows a second embodiment of the tool. The tool 20 has an insertion end 21 that can be inserted in the axial direction into the hole 19 of the shaft element 2. For this purpose this insertion end 21 is provided with a type of fingers 22 (which optionally could also together form a closed sleeve). These fingers can be inserted over an end of a bolt 17 extending upwards so that the adjustable foot 1, 2 can first be placed on the substrate 16 while an anchoring bolt 17 has already been fixed in said substrate 16. Gripper means 23, in this case in the form of clamping blocks, are provided at the bottom of the fingers 22. These clamping blocks 23 can be operated by means of a lever mechanism, of which the fingers 22 form part. The lever mechanism essentially consists of the fingers 22 and arms 33, which are articulated on one another at 24 and the arms of which are articulated on a common second support part 25 at 34. The fingers 22 are also articulated on a common first support part 26 at 35. The clamping blocks 23 are moved radially outwards or radially inwards by now moving the support parts 25, 26 with respect to one another. This movement of the support parts 25 and 26 with respect to one another is, for example, possible by fixing the support part 25 on a pin 27, where rotation of support part 25 with respect to the longitudinal axis of the pin 27 is possible, and fixing support part 26 to the bottom of a sleeve 28 through which the pin 27 runs. The sleeve 28 is provided at the top thereof with a nut body 29 through which the pin 27 runs by means of screw thread 30. The movement of support part 25 with respect to support part 26 is produced by now rotating the pin 27 by means of the arm 31 with respect to the sleeve 28.

It will be clear to those skilled in the art that the tools shown highly diagrammatically in Figure 3 and 4 are merely examples of possible embodiments. Specifically, such tools can be produced in very many ways. The advantage of such tools is that the bore 18 through the shaft element 2 does not have to be provided with special shaping. This can simply remain a circular bore as usual. However, the bore 18 could also be made non circular, in which case the tool merely has to be provided with an insertion end that can be inserted in the non-circular bore 18 with a tight fit. This can be achieved, for example, by providing the non-circular bore with an axial slot on opposite sides and making the insertion end 21 as it were plate-shaped, the ends of the plate then being accommodated at opposite sides of the bore 18 in the slots made.

With reference to Figure 2 of this application and to the figure in EP 888 514, reference number 23, it is pointed out that the cap 11 can also work in conjunction with a scale provided on the annular element 1. Because in the case of a prefered embodiment of the present invention the cap 11 is able to tilt with respect to the annular element 1, it is preferable to provide the annular element 1 with a number of vertical scales provided distributed around the periphery or with a scale extending over the entire periphery. Furthermore, multiple scales make reading easier. The scale can also be a single reference line. This can, for example, indicate the maximum (unscrewing) height of the adjustable foot. This maximum unscrewing height will then be so determined that the associated length of engagement between the internal and external screw thread has an adequate bearing capacity to be able to support a predetermined design load as a consequence of the so-called 'equipment'.

## Claims

1. Combination comprising, on the one hand, an adjustable foot for setting up equipment in alignment and, on the other hand, a tool (40, 20) for setting the height of the adjustable foot,
wherein the adjustable foot comprises:
• a first adjustable part (1) provided with an axial bore with internal screw thread (4);
• a second adjustable part (2) provided with external screw thread (5) matching the internal screw thread (4), which second adjustable part (2), when screwed into the bore, can be adjusted in the axial direction with respect to the first adjustable part (1) by turning with respect to the first adjustable part (1) and which second adjustable part (2) is provided with at least one hole (18) that runs axially;
• a support part (6), provided on the first adjustable part (1) or second adjustable part (2), and
• a washer (3),
wherein the washer (3) and the support part (6) are each provided with a convex (66) respectively, concave surface (6), having essentially the same radius (R) of curvature, such that the angle of the washer (3) can be adjusted with respect to the support part (6)
wherein the tool (20, 40) has an insertion end (21) that can be inserted into the hole (18) in the axial direction and wherein the insertion end (21) is provided with gripper means (43, 23, 22) that are so equipped that, when they engage on the interior of the hole (18) and the insertion end (21) is rotated about the axial axis (52), the second adjustable part (2) also turns,
**characterised in that** the gripper means comprise driver members (23, 43) that are able to move back and forth in the radial direction and are fitted distributed around the periphery of the insertion end (21), which driver members (23, 43) are connected via transmission means (25, 26; 41, 42) to operating means (29, 31; 50, 51) for radially expanding and retracting the driver members (23, 43) for engaging on the hole (18); which operating means (29, 31; 50, 51) are provided on the tool (20, 40) and are located outside the hole (18) when the insertion end (21) has been inserted into the hole (18).

2. Combination according to Claim 1, wherein the gripper means (23, 43) are equipped to engage on the interior peripheral surface of the hole (18).

3. Combination according to Claim 1 or 2, wherein the hole (18) has a circular peripheral shape and wherein the driver members (23, 43) are clamping members for clamping engagement on the interior peripheral surface of the hole (18).

4. Combination according to Claim 2, wherein the hole (18) at least partially has a non-circular peripheral shape and wherein the gripper means (23, 43) have a gripper head that can be accommodated with a tight fit in the non-circular section of the hole.

5. Combination according to one of Claims 1 - 4, wherein the tool furthermore comprises a tensioning pin (27, 46) with a tensioning member (28, 50) that is able to move along it, wherein the tool (20, 40) has a first (25, 41) and second (26, 42) support part for the gripper means (22, 23; 43) at the insertion end, wherein the tensioning pin (27, 46) is actively connected to the second support part (26, 42) and the tensioning member (28, 50) is actively connected to the first support part (25, 41) and wherein the gripper means (22, 23; 43) are supported by the first (23, 41) and second (26, 42) support part in such a way that the gripper means (22, 23; 43) undergo a radial movement when the first (25, 41) and second (26, 42) support parts are moved axially with respect to one another.

6. Combination according to Claim 5, wherein the gripper means (43) comprise fingers (22) that run axially, between which one end of the anchor pin (17) can be accommodated, wherein the hole (18) is an axial opening through the second adjustable part (2), wherein the axial opening has a broadened zone that extends from one end of the axial opening in the axial direction and that has a cross-sectional shape which is larger than the cross-sectional shape of the anchor pin (17) to such an extent that the fingers (22) can be inserted therein with one end of the anchor pin (17) between them.

7. Combination according to one of the preceding claims, wherein the top of the second adjustable part (2) comprises the support part (6).

8. Combination according to one of the preceding claims, wherein the support part (6) is located completely within a contour determined by the diameter of the external screw thread (5).

9. Combination according to Claim 1, wherein the support part (6) is at least partially, preferably completely, sunken in a zone of the second adjustable part (2) that is surrounded by the external screw thread (5).

10. Combination according to one of the preceding claims, wherein, viewed in the axial direction, the height of the second adjustable part (2) is less than or equal to the height of the first adjustable part (1) and wherein, viewed in the radial direction, the dimensions of the second adjustable part (2) are completely within the contour determined by the external screw thread (5).

11. Combination according to one of the preceding claims, wherein the external diameter (C) of the washer (3) is at most equal to the external diameter (B) of the second adjustable part (2).

12. Combination according to one of the preceding claims, wherein the support part (6) has a concave surface and the washer (3) a convex surface (66).

13. Combination according to one of the preceding claims, wherein the second adjustable part (2) and the washer (3) are provided with an axial opening for an anchor bolt (17).

14. Combination according to one of the preceding claims, wherein the axial opening through the washer (3) has a diameter (D) that is approximately 32 to 48 % larger than the diameter (E) of the axial opening through the second adjustable part (2).

15. Combination according to one of the preceding claims, wherein the axial length of the second adjustable part (2) is equal to or less than the axial height of the first adjustable part (1) and wherein the second adjustable part (2) is provided with external screw thread (5) along its entire axial length and/or the internal screw thread (4) of the axial bore extends over the entire axial height of the first adjustable part (1).

16. Combination according to one of the preceding claims, further comprising a substructure (16), an equipment (14) set up in alignment on said substructure (16), and an anchor bolt (9, 17), wherein the equipment (14) is anchored to the substructure (16) by means of the anchor bolt (9, 17), with the adjustable foot between them.

17. Combination according to Claim 16, wherein a bottom surface (8) of the fist adjustable part (1) rests on the substructure (16) and wherein the equipment (14) is in contact with the washer (3) or with the cap (11) which, in turn, is in contact with the washer (3).

18. Use of a tool part of a combination as defined in one of Claims 1- 6 for setting the height of an adjustable foot part of a combination as defined in one of the preceding claims.

## Patentansprüche

1. Kombination enthaltend einerseits einen einstellbaren Fuß um einen Ausrüstungsgegenstand auszurichten und andererseits einem Werkzeug, um die Höhe des einstellbaren Fußes einzustellen,
wobei der einstellbare Fuß enthält:
• ein erstes einstellbares Teil (1), das mit einer axialen Bohrung mit einem Innenschraubengewinde (4) versehen ist;
• einem zweiten einstellbaren Teil (2), das mit einem Außenschraubengewinde (5) versehen ist, das in das Innenschraubengewinde (4) passt, wobei das zweite einstellbare Teil (2), wenn in die Bohrung eingeschraubt, in axiale Richtung relativ zum ersten einstellbaren Teil (1) durch Drehung relativ zum ersten einstellbaren Teil (1) eingestellt werden kann und das zweite einstellbare Teil (2) zumindest ein axial verlaufendes Loch (18) aufweist;
• ein tragendes Teil (6), das auf dem ersten einstellbaren Teil (1) oder dem zweiten einstellbaren Teil (2) angeordnet ist, und
• eine Abdeckscheibe (3),
wobei die Abdeckscheibe (3) und das tragende Teil (6) jeweils mit einer konvexen (66) beziehungsweise konkaven Oberfläche (6) versehen sind, die im Wesentlichen denselben Krümmungsradius (R) haben, so dass der Winkel der Abdeckscheibe (3) relativ zu dem tragenden Teil (6) eingestellt werden kann,
wobei das Werkzeug (20, 40) ein Einsatzende (21) hat, das in axialer Richtung in das Loch (18) eingesetzt werden kann, und wobei das Einsatzende (21) mit Mitteln (43, 23, 22) zum Greifen versehen ist, die so ausgerüstet sind, dass, wenn sie am Inneren des Lochs (18) eingreifen und das Einsatzende (21) um die axiale Achse (52) gedreht wird, das zweite einstellbare Teil (2) auch dreht,
**dadurch gekennzeichnet, dass**
die Mittel zum Greifen Antriebsglieder enthalten, die sich zurück und vorwärts in radialer Richtung bewegen können und die um den Umfang des Einsatzendes (21) verteilt angeordnet befestigt sind, wobei die Antriebsglieder (23, 43) über Übertragungsmittel (25, 26; 41, 42) verbunden sind mit Betätigungsmitteln (29, 31; 50, 51) zum radialen Expandieren und Zurückziehen der Antriebsteile (23, 43), um am Loch (18) einzugreifen, wobei die Betätigungsmittel (29, 31; 50, 51) auf dem Werkzeug (20, 40) vorgeordnet sind und sich außerhalb des Lochs (18) befinden, wenn das Einsatzende (21) in das Loch (18) eingesetzt ist.

2. Kombination gemäß Patentanspruch 1, wobei die Greifmittel (23, 43) ausgerüstet sind, um auf der inneren umfänglichen Oberfläche des Lochs (18) einzugreifen.

3. Kombination gemäß Patentanspruch 1 oder 2, wobei das Loch (18) eine kreisförmige umgängliche Form aufweist und wobei die Antriebsglieder (23, 43) Klemmglieder für einen klemmenden Eingriff an der inneren umfänglichen Oberfläche des Loches (18) sind.

4. Kombination gemäß Patentanspruch 2, wobei das Loch (18) wenigstens teilweise eine nicht kreisförmige umfängliche Form aufweist und wobei die Greifmittel (23, 43) einen Greifkopf aufweisen, der mit festem Sitz in dem nicht kreisförmigen Bereich des Loches untergebracht werden kann.

5. Kombination gemäß einem der Patentansprüche 1-4, wobei das Werkzeug weiterhin einen Spannstift (27, 46) mit einem entlang eines dessen bewegbaren Spannglied (28, 50) enthält, wobei das Werkzeug (20, 40) ein erstes (25, 41) und zweites (26, 42) Tragteil für die Greifmittel (22, 23; 43) am Einsatzende enthält, wobei der Spannstift (27, 46) aktiv an das zweite Tragteil (26, 42) angeschlossen ist und das Spannglied (28, 50) aktiv an das erste Tragteil (25, 41) angeschlossen ist, und wobei die Greifmittel (22, 23; 43) vom ersten (23, 41 ) und zweiten (26, 42) Tragteil so unterstützt werden, dass die Greifmittel (22, 23; 43) eine radiale Bewegung durchführen, wenn die ersten (25, 41) und zweiten (26, 42) Tragteile relativ zu einander axial bewegt werden.

6. Kombination gemäß Patentanspruch 5, wobei die Greifmittel (43) sich nach außen bewegende Finger (22) enthalten, zwischen denen ein Ende eines Ankerstiftes (17) untergebracht werden kann, wobei das Loch (18) eine axiale Öffnung durch das zweite einstellbare Teil (2) ist, wobei die axiale Öffnung einen verbreiterten Bereich hat, der von einem Ende der axialen Öffnung in axialer Richtung reicht und der eine Querschnittsform aufweist, die so viel größer ist, als die Querschnittsform des Ankerstiftes (17), dass die Finger mit einem Ende des Ankerstiftes (17) zwischen ihnen darin eingeführt werden können.

7. Kombination nach einem der vorhergehenden Patentansprüche, wobei die Spitze des zweiten einstellbaren Teils (2) das tragende Teil (6) enthält.

8. Kombination gemäß einem der vorhergehenden Patentansprüche, wobei das tragende Teil vollständig innerhalb einer Kontur angeordnet ist, die durch den Durchmesser des Außenschraubengewindes (5) bestimmt wird.

9. Kombination gemäß Patentanspruch 1, wobei das tragende Teil (6) zumindest teilweise, vorzugsweise vollständig, in den Bereich des zweiten einstellbaren Teils (2) versenkt ist, das von dem Außenschraubengewinde (5) umgeben ist.

10. Kombination gemäß einem der vorhergehenden Patentansprüche, wobei gesehen in axialer Richtung, die Höhe des zweiten einstellbaren Teils (2) geringer oder gleich ist, als die Höhe des ersten einstellbaren Teils (1) und wobei, gesehen in radialer Richtung, die Ausmaße des zweiten einstellbaren Teils (2) vollständig innerhalb der Kontur sind, die durch das Außenschraubengewinde (5) bestimmt wird.

11. Kombination gemäß einem der vorhergehenden Patentansprüche, wobei der äußere Durchmesser (C) der Abdeckscheibe (3) maximal gleich ist dem Außendurchmesser (B) des zweiten einstellbaren Teils (2).

12. Kombination gemäß einem der vorhergehenden Patentansprüche, wobei das tragende Teil (6) eine konkave Oberfläche und die Abdeckscheibe (3) eine konvexe Oberfläche (66) hat.

13. Kombination gemäß einem der vorhergehenden Patentansprüche, wobei das zweite einstellbare Teil (2) und die Abdeckscheibe (3) mit einer axialen Öffnung für einen Ankerbolzen (17) versehen sind.

14. Kombination gemäß einem der vorhergehenden Patentansprüche, wobei die axiale Öffnung durch die Abdeckscheibe (3) einen Durchmesser (D) hat, der annähernd 32% bis 48% größer ist als der Durchmesser (E) der axialen Öffnung durch das zweite einstellbare Teil (2).

15. Kombination gemäß einem der vorhergehenden Patentansprüche, wobei die axiale Länge des zweiten einstellbaren Teils (2) gleich oder geringer ist als die axiale Höhe des ersten einstellbaren Teils (1) und wobei das zweite einstellbare Teil (2) über seine gesamte axiale Länge mit einem Außenschraubengewinde (5) versehen ist und/oder das Innenschraubengewinde (4) der axialen Bohrung sich über die gesamte axiale Höhe des ersten einstellbaren Teils (1) erstreckt.

16. Kombination gemäß einem der vorhergehenden Patentansprüche, die weiterhin eine Substruktur (16) enthält, ein Ausrüstungsgegenstand, der auf dieser Substruktur ausgerichtet ist und ein Ankerbolzen (9, 17), wobei die Ausrüstungsgegenstände (14) auf der Substruktur (16) mittels des Ankerbolzens (9, 17) mit einem einstellbaren Fuß dazwischen verankert sind.

17. Kombination gemäß Patentanspruch 16, wobei eine untere Oberfläche (8) des ersten einstellbaren Teils (1) auf der Substruktur (16) ruht und wobei der Ausrüstungsgegenstand (14) in Kontakt mit der Absteckscheibe (3) oder mit der Kappe (11) steht, die wiederum in Kontakt mit der Abdeckscheibe (3) steht.

18. Verwendung eines Werkzeuges als Teil einer Kombination gemäß einem der Patentansprüche 1 bis 6 um die Höhe eines einstellbaren Fußes einzustellen, der Teil einer Kombination gemäß einem der vorhergehenden Patentansprüche ist.

## Revendications

1. Combinaison comprenant, d'une part, un pied réglable pour mettre un équipement en alignement et, d'autre part, un outil (40, 20) pour régler la hauteur du pied réglable,
dans lequel le pied réglable comprend :
- une première partie réglable (1) pourvue d'un trou axial à filetage interne (4) ;
- une deuxième partie réglable (2) pourvue d'un filetage externe (5) s'adaptant au filetage interne (4), ladite deuxième partie réglable (2), lorsqu'elle est vissée dans le trou, pouvant être réglée dans la direction axiale par rapport à la première partie réglable (1) en la faisant tourner par rapport à la première partie réglable (1) et ladite deuxième partie réglable (2) étant pourvue d'au moins un trou (18) orienté axialement ;
- une partie de support (6) prévue sur la première partie réglable (1) ou sur la deuxième partie réglable (2), et
- une rondelle (3),
où la rondelle (3) et la partie de support (6) sont pourvues respectivement d'une surface convexe (66) et d'une surface concave (6), ayant essentiellement le même rayon de courbure (R), de sorte que l'angle de la rondelle (3) peut être réglé par rapport à la partie de support (6), l'outil (20, 40) ayant une extrémité d'insertion (21) qui peut être insérée dans le trou (18) dans la direction axiale et l'extrémité d'insertion (21) étant pourvue d'un moyen de préhension (43, 23, 22) qui est équipé de telle manière que, lorsqu'on le met en prise avec l'intérieur du trou (18) et que l'on fait tourner l'extrémité d'insertion (21) autour de l'axe axial (52), la deuxième partie réglable (2) tourne aussi,
**caractérisée en ce que** le moyen de préhension comprend des éléments d'entraînement (23, 43) qui sont aptes à se déplacer en avant et en arrière dans la direction radiale et qui sont répartis autour de la périphérie de l'extrémité d'insertion (21), lesdits éléments d'entraînement (23, 43) étant connectés par l'intermédiaire d'un moyen de transmission (25, 26 ; 41, 42) à un moyen d'actionnement (29, 31 ; 50, 51) pour élargir et rétracter radialement les éléments d'entraînement (23, 43) pour les mettre en prise avec le trou (18), ledit moyen d'actionnement (29, 31 ; 50, 51) étant placé sur l'outil (20, 40) et étant situé à l'extérieur du trou (18) quand l'extrémité d'insertion (21) a été insérée dans le trou (18).

2. Combinaison selon la revendication 1, dans laquelle le moyen de préhension (23, 43) est équipé pour se mettre en prise avec la surface périphérique intérieure du trou (18).

3. Combinaison selon la revendication 1 ou 2, dans laquelle le trou (18) a une forme périphérique circulaire et dans laquelle les éléments d'entraînement (23, 43) sont des éléments de serrage pour effectuer une prise par serrage sur la surface périphérique intérieure du trou (18).

4. Combinaison selon la revendication 2, dans laquelle le trou (18) a une forme périphérique au moins partiellement non circulaire et
dans laquelle le moyen de préhension (23, 43) comporte une tête de préhension qui peut être logée en ajustement serré dans la section non circulaire du trou.

5. Combinaison selon l'une des revendications 1 à 4, dans laquelle l'outil comprend en outre un axe de tension (27, 46) avec un élément de tension (28, 50) qui est apte à se déplacer le long de celui-ci, dans laquelle l'outil (20, 40) comporte une première (25, 41) et une deuxième (26, 42) partie de support pour le moyen de préhension (22, 23 ; 43) à l'extrémité d'insertion, l'axe de tension (27, 46) étant connecté de façon active à la deuxième partie de support (26, 42) et l'élément de tension (28, 50) étant connecté de façon active à la première partie de support (25, 41) et le moyen de préhension (22, 23 ; 43) étant supporté par la première (23, 41) et la deuxième (26, 42) parties de support de telle manière que le moyen de préhension (22, 23 ; 43) suit un mouvement radial quand on déplace les première (23, 41) et deuxième (26, 42) parties de support axialement l'une par rapport à l'autre.

6. Combinaison selon la revendication 5, dans laquelle le moyen de préhension (43) comprend des doigts (22) orientés axialement, entre lesquels peut être logée une extrémité de l'axe d'ancrage (17), le trou (18) étant une ouverture axiale dans la deuxième partie réglable (2), l'ouverture axiale ayant une zone élargie qui s'étend depuis une extrémité de l'ouverture axiale dans la direction axiale et qui a une forme en section transversale qui est plus grande que la forme en section transversale de l'axe d'ancrage (17), au point que les doigts (22) peuvent y être insérés avec une extrémité de l'axe d'ancrage (17) entre eux.

7. Combinaison selon l'une des revendications précédentes,
dans laquelle le sommet de la deuxième partie réglable (2) comprend la partie de support (6).

8. Combinaison selon l'une des revendications précédentes,
dans laquelle la partie de support (6) est située entièrement dans les limites d'un contour déterminé par le diamètre du filetage externe (5).

9. Combinaison selon la revendication 1, dans laquelle la partie de support (6) est au moins partiellement, de préférence entièrement, noyée dans une zone de la deuxième partie réglable (2) qui est entourée par le filetage externe (5).

10. Combinaison selon l'une des revendications précédentes,
dans laquelle, vue dans la direction axiale, la hauteur de la deuxième partie réglable (2) est inférieure ou égale à la hauteur de la première partie réglable (1) et dans laquelle, vues dans la direction radiale, les dimensions de la deuxième partie réglable (2) sont entièrement à l'intérieur du contour déterminé par le filetage externe (5).

11. Combinaison selon l'une des revendications précédentes,
dans laquelle le diamètre extérieur (C) de la rondelle (3) et au plus égal au diamètre extérieur (B) de la deuxième partie réglable (2).

12. Combinaison selon l'une des revendications précédentes,
dans laquelle la partie de support (6) a une surface concave et la rondelle (3) a une surface convexe (66).

13. Combinaison selon l'une des revendications précédentes,
dans laquelle la deuxième partie réglable (2) et la rondelle (3) sont pourvues d'une ouverture axiale pour un boulon d'ancrage (17).

14. Combinaison selon l'une des revendications précédentes,
dans laquelle l'ouverture axiale pratiquée dans la rondelle (3) a un diamètre (D) qui est environ 32 à 48 % plus grand que le diamètre (E) de l'ouverture axiale de la deuxième partie réglable (2).

15. Combinaison selon l'une des revendications précédentes,
dans laquelle la longueur axiale de la deuxième partie réglable (2) est inférieure ou égale à la hauteur axiale de la première partie réglable (1) et dans laquelle la deuxième partie réglable (2) est pourvue d'un filetage externe (5) sur toute sa longueur axiale et/ou le filetage interne (4) du trou axial s'étend sur toute la hauteur axiale de la première partie réglable (1).

16. Combinaison selon l'une des revendications précédentes, comprenant en outre une infrastructure (16), un équipement (14) placé en alignement sur ladite infrastructure (16), et un boulon d'ancrage (9, 17), l'équipement (14) étant ancré à l'infrastructure (16) au moyen du boulon d'ancrage (9, 17), avec le pied réglable entre eux.

17. Combinaison selon la revendication 16, dans laquelle une surface inférieure (8) de la première partie réglable (1) repose sur l'infrastructure (16) et dans laquelle l'équipement (14) est en contact avec la rondelle (3) ou avec le chapeau (11) qui est lui-même en contact avec la rondelle (3).

18. Utilisation d'une partie outil d'une combinaison selon l'une des revendications 1 à 6 pour régler la hauteur d'une partie pied réglable d'une combinaison selon l'une des revendications précédentes.
